Europäisches Patentamt

European Patent Office

Office européen des brevets

(11) Numéro de publication: **0 003 711**
**A1**

# DEMANDE DE BREVET EUROPEEN

(21) Numéro de dépôt: 79420007.1

(22) Date de dépôt: 02.02.79

(51) Int. Cl.²: **G 05 D 23/24,** H 05 B 1/02,
**F 24 D 13/02**

(30) Priorité: 10.02.78 FR 7804476

(43) Date de publication de la demande: 22.08.79
Bulletin 79/17

(84) Etats contractants désignés: DE GB NL

(71) Demandeur: SOCIETE DE VENTE DE L'ALUMINIUM
PECHINEY, B.P. 787-08 23, rue Balzac, F-75360 Paris
Cedex 08 (FR)

(72) Inventeur: Le Bars, Claude, "Le Villard" Coublevie,
F-38500 Voiron (FR)

(74) Mandataire: Pascaud, Claude et al, PECHINEY UGINE
KUHLMANN 28, rue de Bonnel, F-69433 Lyon
Cedex 3 (FR)

(54) **Dispositif de régulation à partir de divers capteurs d'un chauffage électrique comportant des éléments noyés dans la structure.**

(57) L'invention concerne un dispositif de régulation d'un chauffage électrique par éléments rayonnants (3) noyés dans la structure d'un bâtiment, et alimentés en très basse tension.

Ce dispositif comprend une pluralité de capteur (S1, S2, S) de température et autres facteurs météorologiques, un moyen de sommation des informations provenant de chaque capteur, un moyen de comparaison (C11) de la somme desdites informations, éventuellement affectées d'un coefficient réglable, avec une valeur de référence, fournissant un signal de commande à partir duquel on contrôle des éléments semi-conducteurs réglables (G1, G2) placés en série dans l'alimentation électrique des éléments rayonnants (3).

Application au chauffage électrique des locaux d'habitation, industriels, commerciaux, dans des conditions très économiques et très souples.

- 1 -

DISPOSITIF DE REGULATION A PARTIR DE DIVERS CAPTEURS
D'UN CHAUFFAGE ELECTRIQUE COMPORTANT DES ELEMENTS NOYES DANS LA STRUCTURE

La présente invention concerne un appareillage pour la régulation d'un système de chauffage électrique de locaux par rayonnement à très faible température, dans lequel les éléments rayonnants sont noyés dans la structure du local ou du bâtiment à chauffer, et notamment dans les dalles. Il s'applique particulièrement à la régulation du chauffage dans les locaux d'habitation, individuels ou collectifs, les bureaux, les magasins, les entrepôts, les usines et les grandes surfaces.

Il est connu de chauffer des locaux au moyen de résistances électriques noyées, lors de la construction, dans des parois, dans les dalles bétonnées ou les sols industriels. Un de ces procédés, connu sous la marque déposée CALENDAL, est basé sur l'utilisation d'un câble à âme massive de forte section, par exemple de 7,5 mm de diamètre, soit de 44 mm2 de section, en aluminium pur, isolé au chlorure de polyvinile et alimenté en très basse tension (48 volts) sous une forte intensité par l'intermédiaire d'un transformateur de sécurité.

Les calories nécessaires à l'obtention de la température intérieure désirée sont obtenues par un apport dosé de courant électrique de nuit, fourni à un tarif avantageux, nécessaire pour compenser les déperditions sur 24 heures et pour obtenir les températures convenables en évitant les surchauffes. La dalle en béton, par sa capacité calorifique, assure le volant thermique nécessaire. Il est toujours possible de procéder à des réalimentations en courant électrique de jour, hors des heures de pointe, si la température de la dalle tombe au-dessous d'une certaine valeur minimale.

De tels systèmes de chauffage doivent donc à la fois assurer le confort des usagers et utiliser, dans les meilleurs conditions possibles, le courant de nuit et éventuellement le courant de jour hors des périodes de pointe pour le chauffage collectif. Ils peuvent être employés seuls, sous forme de surfaces rayonnantes, ou avec l'appoint éventuel de convecteurs. D'autres impératifs doivent être respectés et, notamment, la nécessité de maintenir, pour des raisons physiologiques bien connues, la température de surface de la dalle à une température ne dépassant pas 26 à 27°C et même inférieure, si possible.

Jusqu'à présent, ces systèmes utilisaient des régulations complexes où intervenait  la détection de la seule température extérieure, avec un point de consigne à partir duquel s'enclenchait le chauffage, selon une loi linéaire définissant le niveau d'énergie injecté dans la dalle en fonction des variations de température extérieure, ou selon une loi linéaire des températures de dalle à partir du même point de consigne.

Il en résultait une définition arbitraire du niveau d'énergie nécessaire.

La présente invention permet d'obtenir une régulation proportionnelle extrêmement fine, basée sur la prise en compte d'un certain nombre d'informations telles que : température extérieure, température interne des locaux et température de la dalle, et sur le choix, par l'usager, de la température interne désirée, au moyen d'un dispositif électronique dosant, en permanence, l'énergie injectée dans les résistances de chauffage.

Le dispositif est caractérisé par une pluralité de capteurs de température, et, éventuellement de capteurs d'autres facteurs météorologiques tels que intensité du rayonnement solaire, vitesse du vent, degré d'hygrométrie, etc..., par un moyen de sommation des informations provenant de chaque capteur, chaque information pouvant être affectée d'un coefficient réglable, déterminant l'influence relative de chaque paramètre sur le résultat, un moyen de comparaison de la somme desdites informations avec une valeur de référence réglée en fonction du niveau de confort désiré par l'usager, fournissant un signal de commande et un moyen pour élaborer, à partir de ce signal de commande, des ordres de contrôle d'éléments semi-conducteurs de puissance, réglables, placés en série dans l'alimentation électrique des éléments rayonnants.

Les informations captées vont être, le plus souvent, la température extérieure, la température intérieure, et la température de la dalle.

Les semi-conducteurs de puissance, réglables, seront généralement des thyristors, montés par groupe de deux connectés tête-bêche, de façon à contrôler les deux alternances. On peut aussi utiliser des thyristors doubles, appelés "Triacs" dans la mesure où l'on peut disposer d'éléments de puissance suffisante. De façon à éviter la production de parasites radio-électriques très gênants, on évite d'employer la commande par déphasage, au profit de la commande synchroniséeavec le passage par zéro de la tension alternative.

En variante, on peut disposer, sur le ou les secondaires du transformateur d'alimentation des diodes de redressement, et alimenter ainsi la boucle de chauffage en courant continu, et effectuer le contrôle de puissance au moyen de transistors.

Dans un mode de réalisation de l'invention qui donne des résultats particulièrement remarquables, le dispositif de régulation comporte trois capteurs de température, donnant les informations T externe, T interne et T dalle, qui sont multipliées par trois coefficients $K_1$, $K_2$, $K_3$, et qui donnent, par sommation, la fonction :

$$KT = K_1 \, T_{EXT} + K_2 \, T_{INT} + K_3 \, T_{DALLE}$$

La valeur de la tension KT est comparée à la valeur d'une tension de référence C provenant du potentiomètre de réglage de confort (température inter-ne), réglé par l'usager. La différence de tension (KT - C) est utilisée pour régler, grâce à des thyristors, l'énergie électrique injectée dans les résistances de chauffage, alimentées en courant alternatif à très basse tension.

La figure 1 représente schématiquement un circuit de chauffage à une boucle, régulé par thyristors.

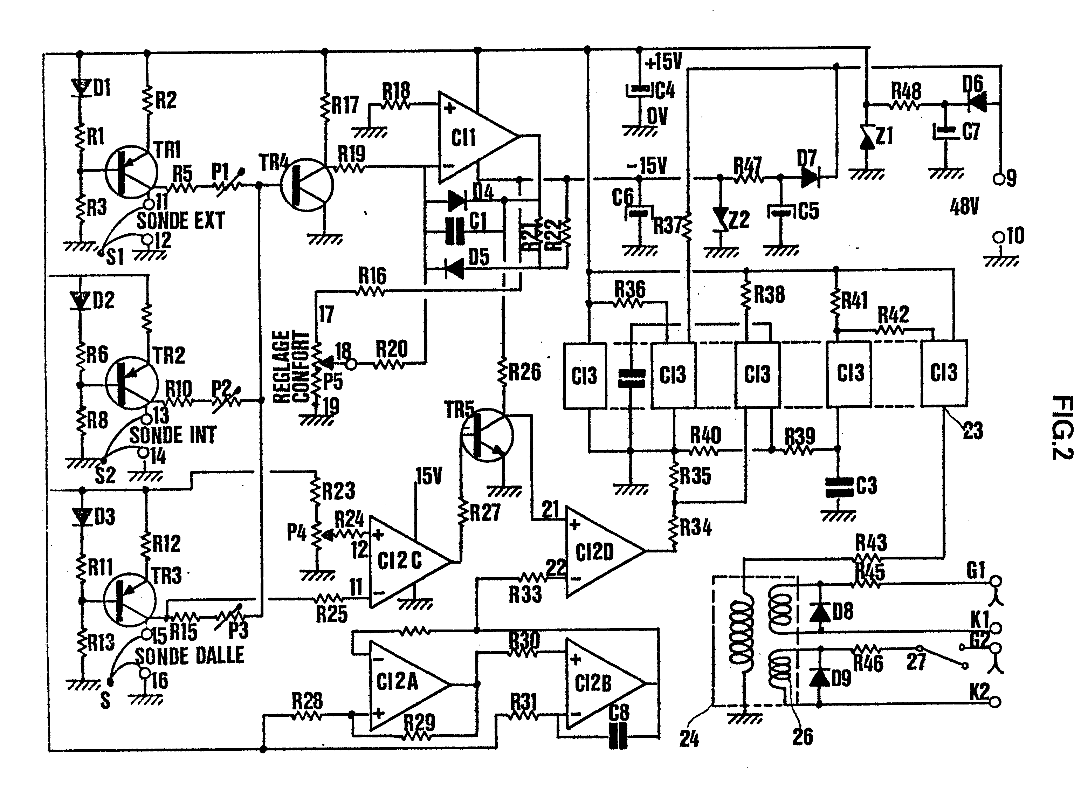

La figure 2 représente à titre d'exemple de réalisation, le détail de circuits électroniques de régulation.

Le transformateur (1) dont la tension primaire est adaptée à celle du réseau de distribution, est protégé, de façon connue, par fusibles et/ou

disjoncteur. L'enroulement secondaire (2) délivre une tension de 48 volts sous environ 226 ampères. Bien qu'on ait représenté un transformateur monophasé, on peut aussi utiliser un transformateur triphasé alimentant trois boucles ou un multiple de 3 boucles de chauffage connectées en étoile, ou 3 circuits monophasés connectés en triangle.

La boucle de chauffage (3) est réalisée en câble à âme en aluminium pur du type 1050 A5L (A1 $\geqslant$ 99,5 %) de 7,5 mm de diamètre (44 mm2 de section), isolé au chlorure de polyvinile (épaisseur 1 à 1,6 mm ) ou en PRC, double épaisseur de 1 mm, d'une résistance électrique voisine de $68.10^{-5}\Omega$ / mètre à sa température maximale d'emploi (50°C). Son extrémité (4) est reliée à une des extrémités de l'enroulement secondaire (2). L'autre extrémité (5) est reliée à un groupe de deux thyristors (6) (7) connectés tête-bêche, de façon à contrôler les deux alternances, et retournant à l'autre extrémité (8) de l'enroulement secondaire (2), qui peut dans le cas d'un groupement triphasé, être pris comme point neutre.

Les gachettes $G_1$ et $G_2$ des thyristors sont alimentées à partir du circuit électronique de régulation.

Ce circuit comporte tout d'abord une alimentation, prélevée sur le circuit à 48 volts alternatifs, et introduite aux points 9 et 10, fournissant deux tensions symétriques continues stabilisées de + 15 et - 15 volts par rapport à la masse, obtenue à partir des éléments D6, C7, R48 et diode zener Z1, pour la tension positive de + 15 volts et à partir de D7, C5 et R47,et diode zener Z2, pour la tension négative de - 15 volts.

Les trois transistors PNP TRI, TR2 et TR3, polarisés respectivement par les éléments R1, R2, R3, D1, R6, R7,R8, D2, R11, R12, R13, D3 permettent d'injecter un courant constant sensiblement égal à 100 microampères dans les sondes de température constituées par des résistances à coefficient de température négatif (CTN) d'une valeur de 10 k$\Omega$ à 25°C. Ces sondes sont branchées aux points 11 et 12 sur TRI (température extérieure T1), aux points 13 et 14 sur TR2 (température intérieure T2), aux points 15 et 16 sur TR3 (température de la dalle T3).

Les potentiomètres P1, P2, P3 de 1M$\Omega$ , respectivement en série avec les résistances R5,R10, R15, de 470 k$\Omega$ , déterminent les coefficients $K_1$, $K_2$,

$K_3$ qui permettent de privilégier plus ou moins l'une ou l'autre des informations "température" dans l'élaboration de la fonction :

$$KT = K_1\, T_{EXT} + K_2\, T_{INT} + K_3\, T_{DALLE}$$

La valeur de la tension correspondant à la fonction KT est comparée à la valeur affichée par le potentiomètre de réglage de confort P5. Cette valeur C est négative, le point 17 étant alimenté, au travers de R16 par la tension de - 15 volts. Le circuit intégré $CI_1$, qui est un amplificateur opérationnel du type μA 741 intègre la différence (KT - C). Par ailleurs, les éléments A et B du circuit intégré $CI_2$, du type LM 3900 de "National Semi-conducteurs" ou équivalent élaborent une tension en dent de scie de période égale à environ 2,5 à 3 secondes. La tension prélevée au point 20 de $CI_1$ est introduite au point 21 de l'élément D du $CI_2$, tandis que la dent de scie est introduite au point 22 de ce même élément. Le résultat est une modulation de la largeur d'impulsion qui sert à déclencher la commande du circuit intégré $CI_3$, du type TCA, 2804, de la "Radiotechnique", ou équivalent, chargé de fournir les impulsions de commande aux gachettes $G_1$ et $G_2$ des thyristors 6 et 7. Ces impulsions sont synchronisées avec le passage par zéro de la tension alternative aux bornes des thyristors. De cette façon, on évite la production des parasites radioélectriques extrêmement gênants que provoque la commande classique des thyristors par déphasage.

Les signaux de commande, prélevés au point 23 du $CI_3$ sont envoyés sur les gachettes par le transformateur 24 dont les deux secondaires 25 et 26 sont connectés entre gachette et cathode de chaque thyristor.

Une commutation 27, qui coupe la liaison à la gachette d'un des thyristors, permet, le cas échéant de faire fonctionner le système de chauffage au quart de sa puissance nominale, en bloquant totalement une des deux alternances.

Ce dispositif peut, par exemple, être déclenché en liaison avec le passage du tarif courant de nuit, au tarif courant de jour, fourni par le réseau EDF, de façon que la consommation en courant de jour ne se fasse qu'au quart de la puissance installée, par mesure d'économie.

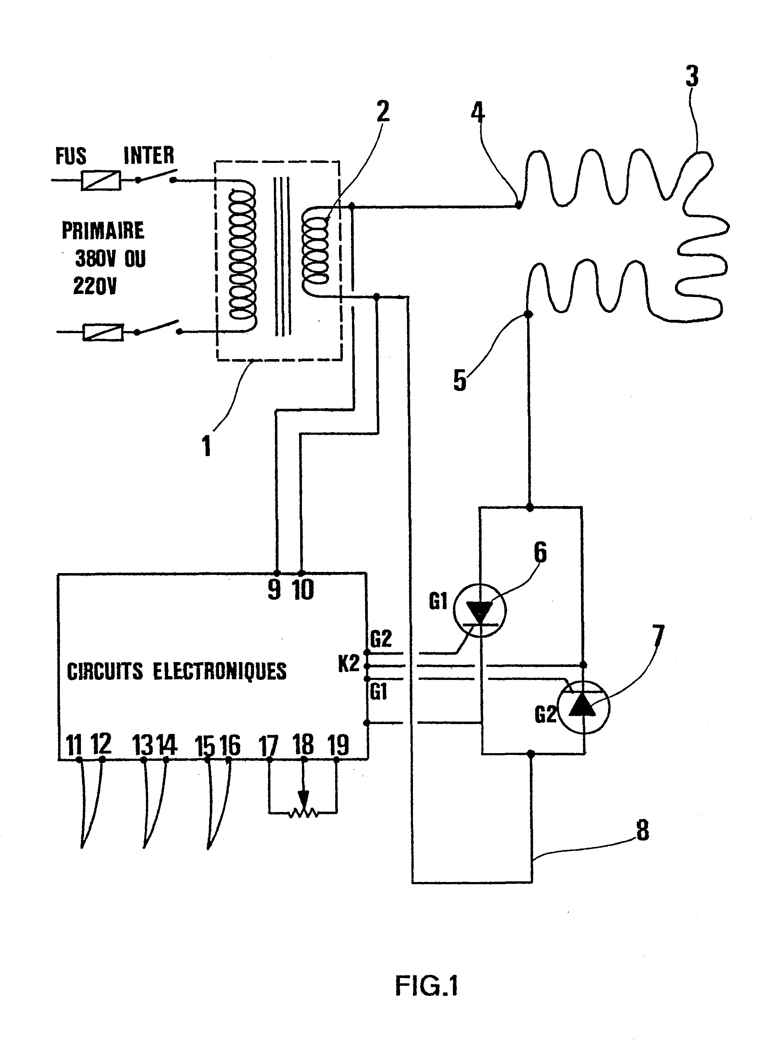

Le tableau I indique la valeur de tous les éléments constituant le circuit électronique de régulation tel qu'il est décrit sur la figure 1.

TABLEAU 1

| REPERE | VALEUR, TOLERANCE | REPERE | VALEUR, TOLERANCE | REPERE | TYPE DE COMPOSANT |
|---|---|---|---|---|---|
| D1 à D5 | : 1N4148 | R31 | : 1M$\Omega$ 5% | $Z_1$ | : Zener 15V,5W |
| D6 - D7 | : 1N4004 | R32 | : 100k$\Omega$ " | $Z_2$ | : " " " |
| D8 - D9 | : 1N4148 | R33 | : 1M$\Omega$ " | | |
| | : | R34 | : 8,2k$\Omega$ " | | |
| R1 | : 56k$\Omega$ 5% | R35 | : 6,8k$\Omega$ " | $T_1$ | : 2N 2905 A |
| R2 | : 47k$\Omega$ " | R36 | : 22k$\Omega$ " | $T_2$ | : 2N 2905 A |
| R3 | : 15k$\Omega$ " | R37 | : 56k$\Omega$ " | $T_3$ | : 2N 2905 A |
| R4 | : 1M$\Omega$ " | R38 | : 330k$\Omega$ " | $T_4$ | : BC 147 B |
| R5 | :470k$\Omega$ " | R39 | : 270k$\Omega$ " | $T_5$ | : 2N 1711 |
| R6 | : 56k$\Omega$ " | R40 | : 150k$\Omega$ " | | |
| R7 | : 47k$\Omega$ " | R41 | : 100k$\Omega$ " | $Cl_1$ | : $\mu$ A 741 |
| R8 | : 15k$\Omega$ " | R42 | : 82k$\Omega$ " | $Cl_2$ | : LM 3900 |
| R9 | : 1M$\Omega$ " | R43 | : 22 $\Omega$ " | $Cl_3$ | : TCA 280 A |
| R10 | :470k$\Omega$ " | R45 | : 10 $\Omega$ " | | (ou équiva-lents) |
| R11 | : 56k$\Omega$ " | R46 | : 10 $\Omega$ " | | |
| R12 | : 47k$\Omega$ " | R47 | : 1k$\Omega$ 5% 5 W | Th1 | : Thyristors |
| R13 | : 15k$\Omega$ " | R48 | : 680$\Omega$5% 10 W | Th2 | : 250A/200V |
| R14 | : 1M$\Omega$ " | | | | |
| R15 | :470k$\Omega$ " | C1 | : 2,2 $\mu$F 63 V | | |
| R16 | :4,7k$\Omega$ " | C2 | : 1 $\mu$F 100 V | | |
| R17 | : 10k$\Omega$ " | C3 | : 1,5nF 100 V | | |
| R18 | : 47k$\Omega$ " | C4 | : 470 $\mu$F 40 V | | |
| R19 | :100k$\Omega$ " | C5 | : 100 $\mu$F 100 V | | |
| R20 | :100k$\Omega$ " | C6 | : 470 $\mu$F 40 V | | |
| R21 | : 10k$\Omega$ " | C7 | : 250 $\mu$F 80 V | | |
| R22 | : 15k$\Omega$ " | C8 | : 1 $\mu$F 63 V | | |
| R23 | :4,7k$\Omega$ " | | :(Tolérance10%) | | |
| R24 | : 1M$\Omega$ " | P1 | : 1M$\Omega$ 10% | | |
| R25 | : 1M$\Omega$ " | P2 | : 1M$\Omega$ 10% | | |
| R26 | : 1M$\Omega$ " | P3 | : 1M$\Omega$ 10% | | |
| R27 | :390k$\Omega$ " | P4 | : 10k$\Omega$ 10% | | |
| R28 | :1,2M$\Omega$10% | P5 | : 10k$\Omega$ 10% | | |
| R29 | :120k$\Omega$ " | | | | |
| R30 | :560k$\Omega$ 5% | | | | |

Les thyristors, qui doivent être d'un type prévu pour une intensité au plus égale à 250 ampères, et pour une tension au plus égale à 220 volts, sont montés, de façon connue, sur des refroidisseurs à ailette ayant une résistance thermique inférieure ou égale à 0,5°C/Watt.

Le réglage est effectué, en fonction des conditions locales, au moyen des trois potentiomètres P1, P2 et P3 qui déterminent l'influence relative des trois paramètres sur le résultat.

Le potentiomètre P4, associé à l'élément C du circuit intégré C12, permet de limiter la température de la dalle à 27°C ou à une température inférieure pour les raisons physiologiques indiquées précédemment. Pour le réglage préalable, on remplace la sonde S3 par une résistance équivalente à sa valeur à 27°C et on règle P4 de façon à avoir une tension de sortie nulle au point 28 de C12/C.

Ce circuit donné à titre d'exemple de réalisation peut être aménagé selon différentes variantes, en utilisant d'autres types de semi-conducteurs équivalents, remplissant les mêmes fonctions, sans sortir du cadre de l'invention.

Parmi les différents avantages de ce dispositif, on peut souligner la facilité d'obtenir, en laboratoire, ou sur chantier, une simulation du fonctionnement réel, permettant un réglage rapide par l'installateur, ce qui ne laisse à l'occupant des locaux que le soin de régler le niveau de confort par action sur un seul potentiomètre.

De façon générale, ce dispositif s'applique à la régulation des boucles de chauffage électrique par le sol dans tous les cas où un bon degré de confort et surtout de notables économies d'énergie sont recherchées. En particulier, dans les systèmes de chauffages collectifs, on peut agir sur plusieurs boucles de chauffage connectées à un même transformateur ce qui permet soit d'optimiser les circuits, soit de mettre en oeuvre des circuits identiques aux différents étages. Dans le domaine des logements individuels, ce principe conduit à doser différemment l'énergie injectée dans les différentes boucles de chauffage des pièces pour tenir compte de leur exposition ou de leur niveau respectif de déperdition thermique.

Il en résulte également que l'on peut se contenter lors de la pose, d'une puissance linéique plus faible (nombre de watts dissipés par mètre de câble chauffant) d'où une économie à la pose et à l'utilisation et une réduction des effets de surchauffe. On peut ainsi utiliser dans les meilleures conditions, l'énergie électrique fournie pendant les heures creuses de nuit et pendant les heures de jour avec une grande souplesse et en assurant le maximum de confort et l'absence de troubles secondaires aux usagers.

0003711

REVENDICATIONS

1°/ Appareillage de régulation d'un système de chauffage électrique de locaux au moyen d'éléments rayonnants noyés dans les dalles et alimentés, en très basse tension, par le secondaire d'un transformateur connecté sur le réseau, caractérisé en ce qu'il comporte une pluralité de capteurs de température et d'autres facteurs météorologiques, un moyen de sommation des informations provenant de chaque capteur, un moyen de comparaison de la somme desdites informations avec une valeur de référence fixée en fonction du niveau de confort désiré, fournissant un signal de commande proportionnel à l'écart entre la valeur de référence et la combinaison des informations recueillies par les capteurs et un moyen pour élaborer, à partir de ce signal de commande, des ordres de contrôle d'éléments semi-conducteurs réglables placés en série dans l'alimentation électrique des éléments rayonnants.

2°/ Appareillage de régulation, selon revendication 1, caractérisé en ce que les capteurs sont constitués par trois sondes de température donnant la température externe, la température interne et la température de la dalle.

3°/ Appareillage de régulation, selon revendication 1, caractérisé en ce que chaque capteur est muni d'un moyen permettant d'affecter à l'information qu'il recueille un coefficient réglable.

FUS  INTER

PRIMAIRE
380V OU
220V

CIRCUITS ELECTRONIQUES

9 10

11 12    13 14    15 16    17  18  19

G2
K2
G1

G1

G2

FIG.1

FIG.2

2/2

00037211

Office européen
des brevets

**RAPPORT DE RECHERCHE EUROPEENNE**

0003711

Numéro de la demande

EP 79 42 0007

| Catégorie | Citation du document avec indication, en cas de besoin, des parties pertinentes | Revendication concernée |
|---|---|---|
| | DE - A - 2 455 948 (GROSSENBACHER ELEKTRONIK AG) <br><br> * Page 1, ligne 4 - page 2, ligne 5; page 3, ligne 5 - page 4, ligne 33; figure * <br><br> -- | 1-3 |
| | DE - A - 2 314 474 (STIEBEL ELTRON G.m.b.H.) <br><br> * Page 1, lignes 1-5; page 6, lignes 5-15; page 7, ligne 17 - page 8, ligne 14; page 10, lignes 7-30; figure * <br><br> -- | 1 |
| A | FR - A - 2 097 623 (E.D.F.) <br><br> * Page 1, lignes 1-34; page 2, ligne 100 - page 3, ligne 37; figures 1-3 * <br><br> -- | 1 |
| A | DE - A - 2 528 200 (STIEBEL ELTRON G.m.b.H. & Co. K.G.) <br><br> * Page 5, ligne 14 - page 6, ligne 9; page 7, lignes 16-32; figures 1,2 * <br><br> -- | 1 |
| A | DE - A - 1 565 774 (REYNOLDS ELECTRICAL & ENGINEERING CO INC.) <br><br> * Page 1, lignes 1-12; page 4, ligne 20 - page 5, ligne 16; figures 1,2 * <br><br> ---- | 1 |

**DOCUMENTS CONSIDERES COMME PERTINENTS**

**CLASSEMENT DE LA DEMANDE (Int. Cl.²)**

G 05 D 23/24
H 05 B 1/02
F 24 D 13/02

**DOMAINES TECHNIQUES RECHERCHES (Int. Cl.²)**

G 05 D 23/19
        23/24
F 24 D 13/02
H 05 B 1/02

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 26-04-1979 | HELOT |

OEB Form 1503.1  06.78